# EUROPÄISCHE PATENTSCHRIFT

(11) **EP 2 475 443 B1**
(45) Veröffentlichungstag und Bekanntmachung des Hinweises auf die Patenterteilung: **09.11.2016**
(21) Anmeldenummer: 10752319.3
(22) Anmeldetag: 07.09.2010
(51) Int. Cl.: B01D 19/00, C12C 13/00

(54) **VERWENDUNG EINES DRALLELEMENTS ZUM AUSDAMPFEN AUS BZW. ENTGASEN VON LEICHTFLÜCHTIGEN STOFFEN ODER GASEN AUS FLÜSSIGKEITEN IN BRAUPROZESSEN**
USE OF A SWIRL ELEMENT FOR EVAPORATING OR DRIVING OUT HIGHLY VOLATILE SUBSTANCES OR GASES FROM LIQUIDS IN BREWING PROCESSES
UTILISATION D'ÉLÉMENT GÉNÉRATEUR DE TURBULENCES POUR L'ÉVAPORATION DE SUBSTANCES OU DE GAZ TRÈS VOLATILS PRÉSENTS DANS DES LIQUIDES OU LE DÉGAZAGE DE CES DERNIERS DANS DES PROCESSUS DE BRASSERIE

(30) Priorität: 11.09.2009 DE 102009040962
(43) Veröffentlichungstag der Anmeldung: 18.07.2012
(73) Patentinhaber: Krones AG, 93073 Neutraubling (DE)
(72) Erfinder: FEILNER, Roland, 93073 Neutraubling (DE)
(74) Vertreter: Grünecker Patent- und Rechtsanwälte PartG mbB
(86) Internationale Anmeldenummer: PCT/EP2010/005483
(87) Internationale Veröffentlichungsnummer: WO 2011/029571

(56) Entgegenhaltungen:
- EP-A1- 1 443 026
- EP-A2- 2 140 920
- DE-A1-102008 050 494
- GB-A- 1 247 126
- US-A- 6 036 749

## Beschreibung

Die Erfindung betrifft die Verwendung eines Drallelements für ein Einlaufventil eines brautechnischen Behälters zum Einbringen einer Flüssigkeit in den brautechnischen Behälter nach Anspruch 1.

Das Entgasen von Flüssigkeiten, wie beispielsweise von flüssigen Lebensmitteln, insbesondere Getränken, erfolgt herkömmlich in einer Entgasungsvorrichtung. Dabei wird die Flüssigkeit einem verminderten Absolutdruck oft in Kombination mit einer gegenüber der Raumtemperatur erhöhten Temperatur ausgesetzt. Um eine möglichst weitgehende Entgasung der Flüssigkeit zu erreichen, ist es erforderlich, alle Volumenelemente der Flüssigkeit den vorstehend genannten Bedingungen auszusetzen. Dazu wird die Flüssigkeit entweder durch Versprühen oder in Gestalt eines dünnen Films in die Entgasungsvorrichtung eingebracht.

In der GB 1 247 126 A wird ein Drallelement mit einer Tragstruktur für ein Einlaufventil beschrieben.

In der Druckschrift JP 2003-164706 wird eine Entgasungsvorrichtung vorgeschlagen, bei der die zu entgasende Flüssigkeit senkrecht von oben und coaxial zur Mittenachse in einen tankförmigen Entgasungsbehälter eingebracht wird. Das Innere des Entgasungsbehälters weist einen verminderten Absolutdruck auf. Im Detail erfolgt die Zuführung durch ein Einlaufventil, das im oberen Bereich des Entgasungsbehälters angeordnet ist. Dabei tritt die Flüssigkeit durch einen fest voreingestellten Ringspalt aus dem Einlaufventil in den Entgasungsbehälter ein. Der Ringspalt wird bei geöffnetem Einlaufventil von einem Ventilsitz und einem Ventilkegel begrenzt. Der Ventilsitz ist der untere Endabschnitt des Einlaufventilgehäuses. Der Ventilkegel ist durch eine Steuereinrichtung derart antreibbar, dass zwei Ventilzustände, nämlich ein vollständig geöffneter Ventilzustand und ein vollständig geschlossener Ventilzustand, verwirklicht werden können.

Beim Durchtreten der Flüssigkeit durch den Ringspalt bei geöffnetem Einlaufventil strömt die Flüssigkeit über den Ventilkegel in den Entgasungsbehälter ein. Dabei ist der Ventilkegel als Schirm ausgebildet, der einen gegenüber dem Einlaufventil vergrößerten Durchmesser aufweist und von der Mittelachse des Einlaufventils, welche coaxial zur Mittelachse des Entgasungsbehälters angeordnet ist, radial nach außen hin abfällt. Die ausströmende Flüssigkeit bildet idealerweise einen dünnen Film auf dem Ventilkegel aus, wobei sich der Film an der den Kegel abschließenden Kante ablöst. Der Flüssigkeitsfilm trifft nach freiem Flug auf die Innenwand des Entgasungsbehälters auf und läuft vertikal nach unten ab.

Aus der Schrift DE 297 22 673 U1 ist eine Vorrichtung zum Entgasen von empfindlichen Lebensmitteln mit viskoser Konsistenz bekannt, bei der ein rotierender, kegelförmiger Teller zur Erzeugung eines dünnen Flüssigkeitsfilms vorgeschlagen wird. Hierbei entspricht der Durchmesser des rotierenden Tellers annähernd dem Innendurchmesser des Entgasungsbehälters, wobei zwischen Tellerrand und Behälterwand ein schmaler, ringförmiger Spalt ausgebildet wird. Während des Entgasungsvorgangs tritt die viskose Flüssigkeit durch den Ringspalt aus und verteilt sich dann aufgrund der durch die Rotationsbewegung einwirkenden Scherkräfte auf dem Teller. Die durch die Scherkräfte bedingte Schleuderwirkung des rotierenden Kegeltellers dünnt die Flüssigkeitsschicht unter Ausbildung eines fließenden Films aus. Der Flüssigkeitsfilm liegt über die gesamte Wegstrecke vom Einlaufventil bis zum Tellerrand in der Nähe der Behälterwand auf der oberen Umfangsfläche des Tellers auf.

Die Verwendung eines herkömmlichen Einlaufventils, bei dem ein Flüssigkeitsfilm durch radiale Umlenkung des Flüssigkeitsstroms an einem Ventilkegel ausgebildet wird, ist insofern nachteilig, als es bei der Entgasung verschiedener Flüssigkeiten und/oder unter sich ändernden physikalischen Randbedingungen zu einer nicht optimalen Film- bzw. Schirmbildung hinsichtlich des Austrags von Gasen aus der Flüssigkeit kommen kann. Werden verschiedene Flüssigkeiten oder Flüssigkeiten variabler Zusammensetzung mit derselben Einlaufvorrichtung in die Entgasungsvorrichtung eingebracht, so kann es in Folge der unterschiedlichen Strömungs- bzw. Fließverhalten der Flüssigkeiten zur Ausbildung von Flüssigkeitsfilmen unterschiedlicher Gestalt kommen, die von der für die Entgasung optimalen Filmgestalt zwangsweise abweichen. Neben den physikalischen Randbedingungen bestimmt im Wesentlichen die Zusammensetzung einer Flüssigkeit deren rheologische Eigenschaften und somit deren Strömungsverhalten. Die Zusammensetzung wird wiederum vom Lösungsmittel, im Anwendungsfall insbesondere Wasser oder Öl, und von Menge und Art der gelösten Inhaltsstoffe bestimmt. Im Falle von Suspensionen wirkt sich zudem der Feststoffgehalt auf die Strömungseigenschaften aus.

Ein weiterer Nachteil eines herkömmlichen Einlaufventils ist, dass die Ausbildung eines Flüssigkeitsfilms optimaler Dicke einen konstanten Volumenstrom der in die Entgasungsvorrichtung einströmenden Flüssigkeit voraussetzt. Bedingt durch äußere Einwirkungen, insbesondere durch Einflüsse von vor- oder nachgeschalteten Aggregaten in einem kontinuierlichen Herstellungs- bzw. Verarbeitungsprozess, kann es jedoch zu Schwankungen im Flüssigkeitsvolumenstrom bei der Entgasung kommen. Ein vom ursprünglich vorgesehenen Sollwert abweichender Volumenstrom führt jedoch zur Ausbildung eines im Hinblick auf die Entgasung nicht optimalen Flüssigkeitsfilms und mithin zu einem unzureichenden Entgasungsergebnis.

Neben den unzureichenden Entgasungsergebnissen können Abweichungen vom optimalen Flüssigkeitsfilm während des Entgasungsvorgangs auch zu verstärktem Schäumen der Flüssigkeit führen. Dies kann insbesondere dann auftreten, wenn der Flüssigkeitsfilm in einem ungünstigen, hinreichend steilen Winkel auf die Innenwand des Entgasungsbehälters auftritt. Erreicht die Schaumbildung eine derartige Intensität im Entgasungsbehälter, dass der Schaum die - oftmals coaxial im Einlaufventil mitintegrierte - Vakuumabsaugung erreicht, kann es zur Störung des Entgasungsvorgangs und gegebenenfalls des gesamten Herstellungsverfahrens kommen.

Der Einsatz eines Kegeltellers mit aufliegendem Flüssigkeitsfilm bringt zudem die aufwendige Montage eines weiteren Bauteils mit hohem Raumbedarf mit sich. Darüber hinaus erfordert der vorgeschlagene Kegelteller eine aufwändige Aufhängung und einen mechanisch komplizierten Antrieb für die Rotation des Kegeltellers. Ferner ist eine Entgasungsvorrichtung mit derartigen Einbauten schwer zu reinigen, was insbesondere für die Entgasung von flüssigen Lebensmitteln nachteilig ist.

Darüber hinaus war es bisher nicht möglich, den Teil einer Innenfläche im oberen Teil des Entgasungsbehälters, der oberhalb der Auftrefffläche des Flüssigkeitsfilms lag, als Entgasungsfläche zu nutzen. Dadurch war die nutzbare Entgasungsfläche beschränkt, was zu einem unzureichenden Gasaustrag und zu größeren Behältern führte.

Zudem wurden im herkömmlichen Brauprozeß Flüssigkeiten, wie beispielweise Maische oder Würze, zur Vermeidung von Sauerstoffaufnahme in Gestalt einer Rohrströmung mit einem möglichst kleinen Oberfläche-zu-Volumen-Verhältnis in einen brautechnischen Behälter eingebracht. Um den Eintrag von Sauerstoff weiter zu verringern, wurde die Flüssigkeit ferner vom Behälterboden in einer der Schwerkraft entgegengesetzten Richtung in den brautechnischen Behälter eingebracht. Dabei wurde jedoch nur eine geringe Ausdampfwirkung von unerwünschten, leichtflüchtigen Stoffen, wie bestimmten Aromastoffen, erzielt.

Der Erfindung liegt daher die Aufgabe zugrunde, eine Verwendung eines Drallelements für ein Einlaufventil eines brautechnischen Behälters zum Einbringen einer Flüssigkeit in den brautechnischen Behälter bereitzustellen, so dass ein produktschonendes, insbesondere schaumarmes, Einbringen einer Flüssigkeit, insbesondere einer Maische, einer Würze, einer Hefesuspension, eines Anschwänzwassers, eines Glattwassers oder dergleichen, in den brautechnischen Behälter unter Ausbildung eines optimalen Flüssigkeitsfilms auch bei schwankenden Flüssigkeitszusammensetzungen und/oder Volumenströmen erzielt wird.

Diese Aufgabe wird durch die Verwendung eines Drallelements in einem brautechnischen Prozeß zum Ausdampfen und/oder Entgasen von leichtflüchtigen Stoffen oder Gasen aus Flüssigkeiten mit den Merkmalen des Anspruchs 1 gelöst.

Erfindungsgemäß wird damit erstmals der Einsatz eines Drallelements für ein Einlaufventil zur Verwendung in einem brautechnischen Prozess vorgeschlagen, wobei die einströmende Flüssigkeit durch Wechselwirkung mit dem wenigstens einen Strömungsleitelement einen Drehimpuls erhält, so dass sie einen Drall aufweist. Die Erzeugung des Drehimpulses führt zu einer tangentialen Beschleunigung der strömenden Flüssigkeit, die eine zusätzliche Bewegungskomponente in im Wesentlichen radialer Richtung verursacht. Der Drehimpuls bewirkt, dass sich die Flüssigkeit vom Drallelement unter Ausbildung eines Flüssigkeitsfilms bzw. -schirms ablöst.

Vorteilhaft ist hierbei, dass der Flüssigkeitsfilm für die Ausdampfung und/oder Entgasung optimale Eigenschaften, insbesondere eine optimale Filmdicke aufweist. Durch die optimalen Ausdampfungs- und/oder Entgasungseigenschaften des erzeugten Flüssigkeitsfilms kann ein hinreichender Stoffaustrag aus der Flüssigkeit sichergestellt werden.

Die tangentiale Beschleunigung des Flüssigkeitsfilms bewirkt ferner erstmals ein unmittelbares Anlegen des Flüssigkeitsfilms an eine Innenfläche des Einlaufventils oder des brautechnischen Behälters. Damit kann die Innenfläche des brautechnischen Behälters erstmals praktisch vollständig als Ausdampfungs- und/oder Entgasungsfläche genutzt werden.

Aufgrund des unmittelbaren Anlegens des Flüssigkeitsfilms an die Innenfläche und des engen Anliegens des Flüssigkeitsfilms beim Ablauf an der Innenfläche kann das Schäumen der zu entgasenden Flüssigkeit weiter vermindert werden.

Das Aufprägen eines Drehimpulses auf eine durch das Drallelement strömende Flüssigkeit macht es darüber hinaus erstmals möglich, einen Flüssigkeitsfilm optimaler Dicke selbst bei schwankendem Volumenstrom zu erzeugen. So wird beispielsweise bei Zunahme des Volumenstroms die Strömungsgeschwindigkeit im Einlaufventil erhöht, wodurch aufgrund der Wechselwirkung der Flüssigkeit mit dem wenigstens einen Strömungsleitelement auch die Winkelgeschwindigkeit der Flüssigkeit zunimmt. Hierdurch wird wiederum die radiale Geschwindigkeitskomponente vergrößert, so dass trotz des höheren Volumenstroms ein Flüssigkeitsfilm mit gleichbleibender und optimaler Dicke ausgebildet wird. Erfindungsgemäß ist somit eine aktive Steuerung des Filmbildungsprozesses nicht erforderlich.

Ferner wirken durch das erfindungsgemäße Drallelement nur geringfügige Scherkräfte auf die strömende Flüssigkeit, wodurch die zu ausdampfende und/oder entgasende Flüssigkeit geschont wird und deren Qualität erhalten bleibt.

Zudem lassen sich herkömmliche Einlaufventile und/oder brautechnische Behälter bzw. Ausdampfvorrichtungen mit dem erfindungsgemäßen Drallelement nachrüsten, so dass die Vorteile der Erfindung durch einen minimalen Kosten- und Montageaufwand erzielt werden können.

Durch den Einsatz des Drallelements wird ein produktschonendes und effizientes Ausdampfen von leichtflüchtigen oder gasförmigen Stoffen aus einer Flüssigkeit oder einer Suspension erreicht. Hierbei wird unter einem leichtflüchtigen Stoff eine Aromakomponente oder dergleichen, wie beispielweise Dimethylsulfid (DMS), dessen Vorläufersubstanz (DMS-P), wie sie insbesondere in einer Maische, einer Würze oder dergleichen enthalten sein kann, verstanden. Unter gasförmigen Stoffen werden insbesondere Kohlenstoffdioxid, Sauerstoff, Luft oder dergleichen verstanden. Unter einer Flüssigkeit wird insbesondere eine Maische, eine Würze, eine Hefesuspension, ein Anschwänzwasser, ein Glattwasser, ein Blendingwasser, ein Bier oder dergleichen verstanden.

Insbesondere wird durch Ausbildung und Anlegen eines Flüssigkeitsfilms an der Innenfläche des Einlaufventils und des brautechnischen Behälters die zur Ausdampfung genutzte Fläche vergrößert. Hierdurch wird erstmals, auch die Innenfläche des Einlaufventils und des brautechnischen Behälters bzw. Ausdampfbehälters zur Ausdampfung genutzt.

Das Drallelement zeichnet sich ferner durch einen breiten Anwendungsbereich hinsichtlich der verbesserten Ausdampfung aus. So ist es in einer Vielzahl von brautechnischen Behältern, wie sie vorstehend aufgezählt sind, einsetzbar.

Ein besonderer Vorteil der Verwendung des erfindungsgemäßen Drallelements stellt die Vermeidung von Einbauten, wie beispielsweise Steigrohre oder dergleichen, in brautechnischen Behältern dar. Hierdurch wird die Verschmutzung des Behälterinneren wie auch darin verbauter derartiger Steigrohre oder dergleichen vermieden bzw. weiter vermindert.

Weitere Vorteile sind die Steigerung der Qualität der resultierenden Maischen, Würzen, Biere oder dergleichen. Darüber hinaus lassen sich die bekannten Brauprozesse kostengünstiger gestalten. Zudem werden Energie und Arbeitszeit eingespart. Schließlich lassen sich die Geschmacksqualität und -Stabilität eines derart hergestellten Getränks, insbesondere eines Bieres oder eines Biermischgetränks, steigern.

Das Drallelement kann eine Tragstruktur aufweisen. Die Tragstruktur stützt das Strömungsleitelement und legt seine Orientierung im Raum fest.

Insbesondere ist es von Vorteil, wenn die Tragstruktur im Wesentlichen zylindrisch oder rohrförmig ausgebildet ist. Eine Tragstruktur mit im Wesentlichen runden Querschnitt verursacht einen minimalen Strömungswiderstand beim Umströmen der Tragstruktur.

Ferner kann beim Drallelement wenigstens ein Strömungsleitelement auf einer äußeren Umfangsfläche und/oder auf einer Innenfläche der Tragstruktur angeordnet sein. Diese Anordnung ermöglicht eine maximale Gestaltungsfreiheit des Drallelements unter Berücksichtigung einer strömungsoptimierten Gestaltung.

Besonders vorteilhaft ist, wenn das Strömungsleitelement wendel- oder spiralförmig ausgestaltet ist. Dadurch kann in konstruktiv einfacher Weise eine produktschonende Beschleunigung in tangentialer Richtung zur Aufprägung eines Drehimpulses bzw. Erzeugung eines Dralls erreicht werden.

Ferner besteht die Möglichkeit, dass die Steigung des Strömungsleitelements über einen strömungsberührten Abschnitt nicht konstant ist. Dies erlaubt vorteilhaft die Voreinstellung von sich ändernden Kräften, die beim Durchströmen der Flüssigkeit durch das Drallelement einwirken. Hierdurch kann eine nicht konstante Beschleunigung der Flüssigkeit besonders einfach erreicht werden.

Insbesondere kann die Steigung des Strömungsleitelements über den strömungsberührten Abschnitt stromabwärts abnehmen. Hierdurch wird eine zunehmende Beschleunigung der Flüssigkeit beim Durchströmen des Drallelements erreicht, wobei die Scherkräfte stetig und nicht sprungartig zunehmen. Damit wird eine besonders produktschonende und schaumvermeidende Beschleunigung realisiert.

Durch die abnehmende Steigung des Strömungsleitelements wird die Strömungsquerschnittsfläche stromabwärts entlang des Strömungsleitelements verringert, wodurch eine Druckerhöhung auf die durchströmende Flüssigkeit vorteilhaft erzielt wird.

Dies hat zudem das Auftreten eines Staupunkts zur Folge, der durch seinen vergrößerten Druckverlust dafür sorgt, dass das Ventil aufwärts nicht leerläuft.

Die Tragstruktur kann an einem stromabwärtsseitigen Endabschnitt einen Durchmesser aufweisen, der gegenüber dem Durchmesser an einem stromaufwärtsseitigen Endabschnitt vergrößert ist. Dieser vergrößerte Durchmesser erleichtert aufgrund einer zusätzlichen radialen Beschleunigungskomponente die Strömungsablösung am stromabwärtsseitigen Endabschnitt des Drallelements.

Die Tragstruktur kann an einem stromabwärtsseitigen Endabschnitt einen Durchmesser aufweisen, der gegenüber dem Durchmesser an einem stromaufwärtsseitigen Endabschnitt verkleinert ist. Hierdurch kann eine Strömungsabrisskante ausgebildet werden, die eine Strömungsablösung am stromabwärtsseitigen Endabschnitt des Drallelements vorteilhaft erleichtert.

Das erfindungsgemäße Drallelement kann zum Ausdampfen von leichtflüchtigen Aromastoffen, insbesondere von DMS, aus einer Maische beim Einbringen derselben in die Maischepfanne, in den Maischebottich, in eine Läutervorrichtung, wie beispielsweise ein Läuterbottich oder eine Maischefilter, in die kombinierte Maisch-/Würzepfanne, eine kombinierte Maisch-/Würze-/Strippingpfanne oder in einen Ausdampfbehälter verwendet werden.

Ferner kann das Drallelement zum Ausdampfen von leichtflüchtigen Aromastoffen, insbesondere von DMS, aus einer Würze beim Einbringen derselben in die kombinierte Maisch-/Würzepfanne, eine kombinierte Maisch-/Wurze-/Strippingpfanne, in die Würzepfanne, in die kombinierte Whirlpoolpfanne, in den Whirlpool oder in einen Ausdampfbehälter verwendet werden.

Weiter kann das Drallelement zum Ausdampfen von leichtflüchtigen Aromastoffen, insbesondere von DMS, aus einer Würze vor Abkühlen der Würze, insbesondere in einem Würzekühler, verwendet werden.

Zudem kann das Drallelement zum Entgasen bzw. teilweisen oder vollständigen Austreiben bzw. Strippen von gasförmigen Stoffen, insbesondere von Kohlenstoffdioxid, aus einer Hefesuspension, insbesondere von Erntehefe und Gelägerhefe, verwendet werden.

Mittels der Verwendung des Drallelements gelingt es erstmals, eine Hefesuspension, insbesondere Ernte- oder Gelägerhefe, schonend und effizient von Kohlenstoffdioxid oder anderen gasförmigen Stoffen weitestgehend oder zumindest teilweise zu entlasten.

Schließlich kann das Drallelement zum Entgasen bzw. teilweisen oder vollständigen Austreiben bzw. Strippen von gasförmigen Stoffen, insbesondere von Sauerstoff, aus einem Anschwänzwasser, einem Glattwasser, einem Blendingwasser oder Mischungen derselben, beim Einbringen desselben in eine Läutervorrichtung verwendet werden.

Dabei wird erfindungsgemäß unter Blendingwasser ein Wasser verstanden, dass zum Verdünnen von Würze oder Bier, beispielsweise beim High-Gravity-Brauen, verwendet wird. Erfindungsgemäß kann unter der Flüssigkeit auch ein Wasser verwendet werden, dass bei der Filtration der Würze oder des Bieres verwendet wird.

Die Erfindung wird nachfolgend in anhand der Figuren der Zeichnung näher erläutert. Es zeigt:
Fig. 1 eine schematische perspektivische Ansicht eines Drallelements;
Fig. 2 eine schematische perspektivische Ansicht eines anderen Drallelements;
Fig. 3 eine schematische perspektivische Ansicht eines weiteren Drallelements;
Fig. 4 eine schematische Teilschnittansicht eines Einlaufventils mit dem Drallelement der Fig. 2;
Fig. 5 eine schematische perspektivische Teilschnittansicht des Einlaufventils der Fig. 4;
Fig. 6 eine detaillierte Schnittansicht des Einlaufventils der Fig. 4;
Fig. 7 eine schematische perspektivische Teilschnittansicht eines anderen Einlaufventils;
Fig. 8 eine schematische perspektivische Teilschnittansicht des Einlaufventils der Fig. 7;
Fig. 9 eine schematische Querschnittansicht einer Würzepfanne, welche das Einlaufventil der Fig. 7 aufweist;
Fig. 10 eine schematische Querschnittansicht einer Würzepfanne mit Außenkocher, welche das Einlaufventil der Fig. 7 aufweist;
Fig. 11 eine schematische Querschnittansicht eines Whirlpools, welcher das Einlaufventil der Fig. 7 aufweist;
Fig. 12 eine schematische Querschnittansicht eines weiteren Einlaufventils; und
Fig. 13 eine schematische Seitenansicht desEinlaufventils der Fig. 12;

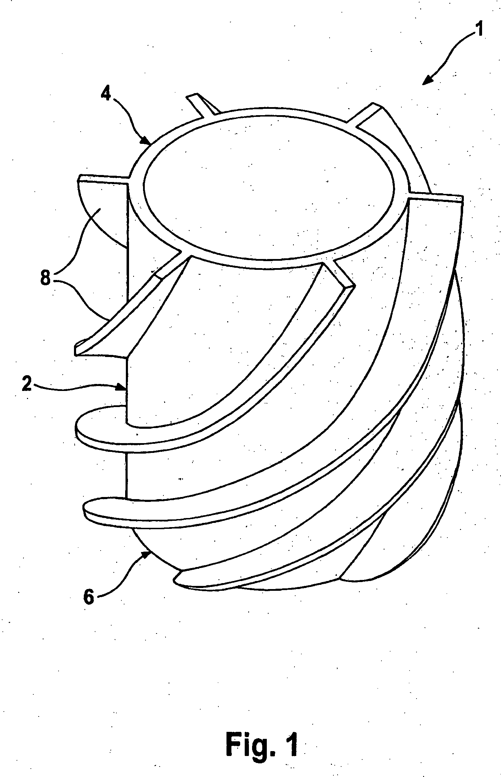

Gemäß der Darstellung in Fig. 1 weist ein Drallelement 1, eine Tragstruktur 2 mit einem stromaufwärtsseitigen Endabschnitt 4 und einem stromabwärtsseitigen Endabschnitt 6 auf. Die Tragstruktur 2 weist die Gestalt eines im Wesentlichen zylindrischen Hohlkörpers auf.

Das Drallelement 1 weist ferner sechs Strömungsleitelemente 8 auf, die auf der äußeren Umfangsfläche der Tragstruktur 2 angeordnet sind. Die Strömungsleitelemente 8 weisen eine streifenförmige Gestalt in wendeiförmiger Anordnung auf, wobei die Länge eines Strömungselements 8 ein Mehrfaches seiner Breite sowie seiner Dicke beträgt. Die Strömungsleitelemente 8 sind an ihrer Längsseite durchgehend mit der zylindrischen Tragstruktur 2 verbunden. Sie stehen im Wesentlichen senkrecht von der äußeren Umfangsfläche der Tragstruktur 2 auf. Dabei verläuft die Führung der Strömungsleitelemente 8 in Strömungsrichtung der Flüssigkeit gesehen im Uhrzeigersinn. Die Strömungsleitelemente 8 beginnen am stromaufwärtsseitigen Endabschnitt 4 der Tragstruktur 2 und reichen bis zu dessen stromabwärtsseitigen Endabschnitt 6. In der Zentralperspektive gesehen umfassen die Strömungsleitelemente 8 zwischen dem stromaufwärtsseitigen Endabschnitt 4 und dem stromabwärtsseitigen Endabschnitt 6 einen Bereich von etwa des halben Umfangs der Tragstruktur 2 (ca. 180 °). Die Steigung der Strömungsleitelemente 8 ist in der Nähe des stromaufwärtsseitigen Endabschnitts 4 größer als in der Nähe des stromabwärtsseitigen Endabschnitts 6. D.h., in Strömungsrichtung gesehen, sind die Strömungsleitelemente 8 am stromaufwärtsseitigen Endabschnitt 4 steiler ansteigend, während sie am stromabwärtsseitigen Endabschnitt 6 flacher ansteigend ausgebildet sind.

Aufgrund dieser Führungsgestalt wird eine am Endabschnitt 4 einströmende Flüssigkeit zunächst nur leicht tangential beschleunigt. Strömt die Flüssigkeit weiter am Strömungsleitelement 8 des Drallelements 1 entlang, nimmt die tangentiale Beschleunigung aufgrund der abnehmenden Steigung der Strömungsleitelemente 8 zum Endabschnitt 6 derart zu, dass die Strömungslängsbewegung der Flüssigkeit entlang einer Zentralachse des Drallelements 1 zunehmend von einer Drehbewegung im Uhrzeigersinn um die Zentralachse überlagert wird. Die Drehbewegung kann jedoch auch entgegen dem Uhrzeigersinn um die Zentralachse gerichtet sein.

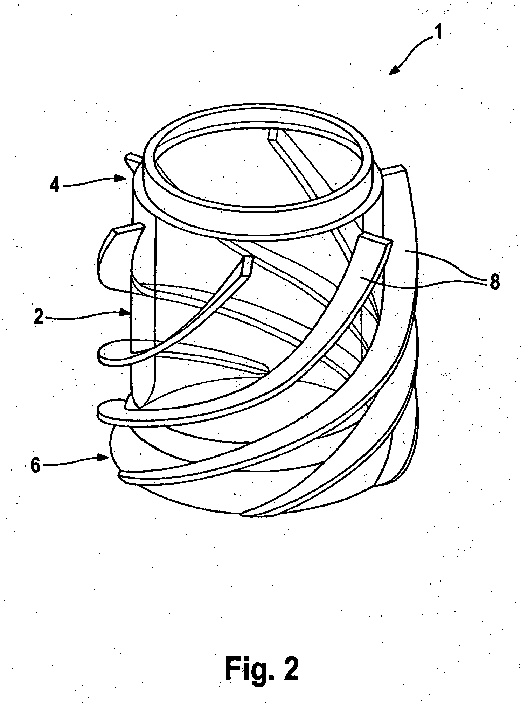

Ein weiteres Beispiel eines Drallelements 1 ist in Fig. 2 dargestellt. Hinsichtlich der Merkmale, die bei dem Beispiel gemäß Fig. 1 und dem Beispiel gemäß Fig. 2 identisch sind, wird auf die Beschreibung der Fig. 1 verwiesen.

Das Drallelement 1 gemäß Fig. 2 weist am stromabwärtsseitigen Endabschnitt 6 der Tragstruktur 2 einen Durchmesser auf, der gegenüber dem Durchmesser des stromaufwärtsseitigen Endabschnitts 4 der Tragstruktur 2 vergrößert ist.

Der vergrößerte Durchmesser des stromabwärtsseitigen Endabschnitts 6 der Tragstruktur 2 bewirkt eine zusätzliche Umlenkung des Flüssigkeitsstroms in im Wesentlichen radialer Richtung hinsichtlich der Zentralachse des Drallelements 1. Damit erhält die durchströmende Flüssigkeit eine zusätzliche Geschwindigkeitskomponente, die senkrecht zur Zentralachse des Drallelements 1 gerichtet ist. Die so erhaltene radiale Beschleunigung erleichtert vorteilhaft die Ablösung des Flüssigkeitsfilms am Endabschnitt 6 der Tragstruktur 2. Der stromaufwärtsseitige Endabschnitt 4 weist eine stufenförmige Verjüngung auf.

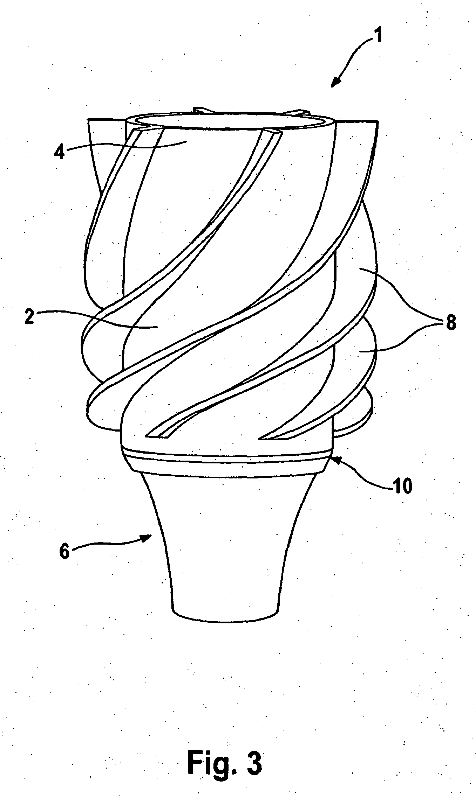

Ein drittes Beispiel für ein Drallelement 1 ist in Fig. 3 dargestellt. Hinsichtlich der Merkmale, die bei dem Beispiel gemäß Fig. 1 und dem Beispiel gemäß Fig. 3 identisch sind, wird auf die Beschreibung der Fig. 1 verwiesen.

Das Drallelement 1 gemäß Fig. 3 weist am stromabwärtsseitigen Endabschnitt 6 der Tragstruktur 2 einen Durchmesser auf, der gegenüber dem Durchmesser des stromaufwärtsseitigen Endabschnitts 4 der Tragstruktur 2 verkleinert ist. Der Durchmesser der Tragstruktur 2 verkleinert sich am Endabschnitt 4 in Strömungsrichtung nicht linear, sondern kurvenförmig, wobei die Durchmesserminderung stetig ist. Dadurch bildet sich am Übergang vom zylindrischen Abschnitt der Tragstruktur 2 zum sich in Strömungsrichtung zunehmend verjüngenden Endabschnitt 4 eine Kante 10 aus. Diese Kante 10 bewirkt bei hinreichender tangentialer Beschleunigung der strömenden Flüssigkeit eine erleichterte Ablösung derselben von der äußeren Umfangsfläche der Tragstruktur 2.

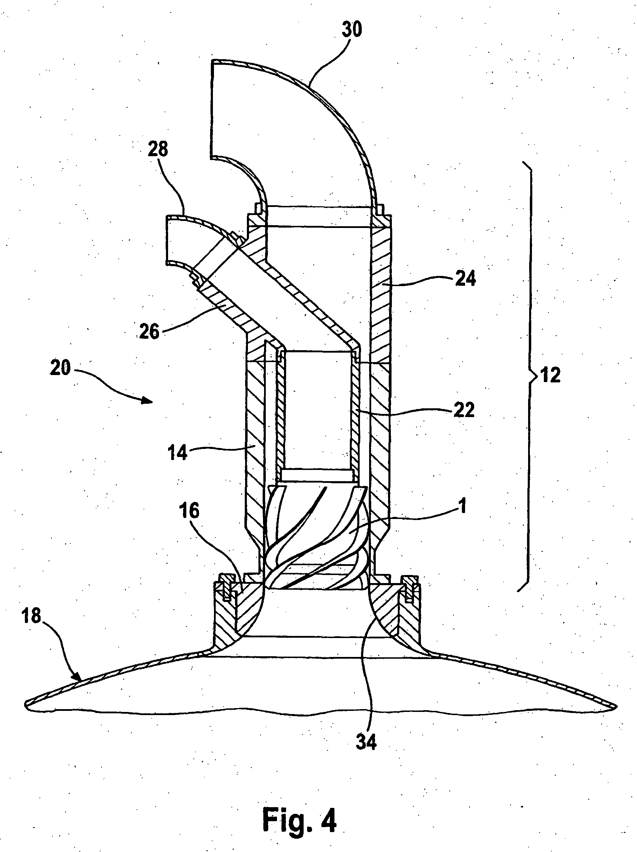

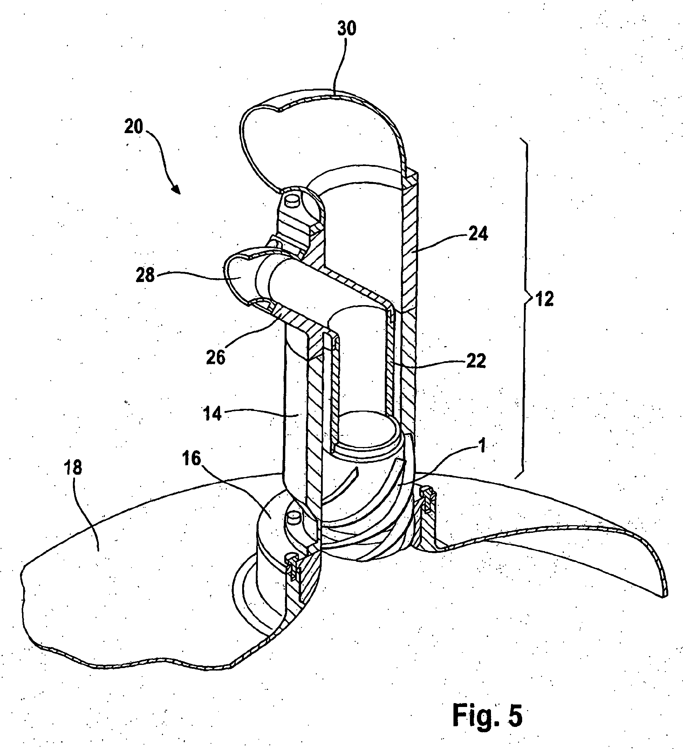

Gemäß der Darstellung in den Figuren 4 und 5 weist ein Einlaufventil 12 das Drallelement 1, ein Ventilgehäuse 14, einen Flansch 16 zum Anschließen an den brautechnischen Behälter 18 einer Ausdampfvorrichtung 20, ein Innenelement 22, eine Flüssigkeitszuführeinrichtung 24 und einen Vakuumanschluss 26 auf. Hinsichtlich des Drallelements 1 wird auf die Beschreibung der Fig. 2 verwiesen.

Das Ventilgehäuse 14 weist im Wesentlichen die Gestalt eines zylindrischen Hohlkörpers auf. In seinem stromaufwärtsseitigen Endabschnitt weist es die Flüssigkeitszuführeinrichtung 24 und den Vakuumanschluss 26 auf. An seinem strömungsabwärtsseitigen Endabschnitt ist das Ventilgehäuse 14 mit dem Flansch 16 verbunden. Der Flansch 16 ist in den brautechnischen Behälter 18 der Ausdampfvorrichtung 20 eingebaut. Von der Ausdampfvorrichtung 20 ist in den Fig. 4 und 5 das Einlaufventil 12 und der brautechnische Behälter 18 dargestellt. Als weitere Komponenten der Ausdampfvorrichtung 20, wie beispielsweise Pumpen oder Steuereinrichtungen, können handelsübliche, aus dem Stand der Technik bekannte Komponenten eingesetzt werden.

Das Drallelement 1 ist im Innern des Ventilgehäuses 14 angeordnet. Genauer ist das Drallelement 1 am stromabwärtsseitigen Endabschnitt des Ventilgehäuses 14 coaxial zu dessen Zentralachse angeordnet. Der Durchmesser der Tragstruktur 2 ist kleiner als der Innendurchmesser des Ventilgehäuses 14, wodurch sich ein im Wesentlichen zylindrischer Hohlraum zwischen der Tragstruktur 2 und dem Ventilgehäuse 14 ausbildet, der die Strömungsleitelemente 8 aufnimmt. Auf den stromaufwärtsseitigen Endabschnitt 4 des Drallelements 1 ist das Innenelement 22 aufgesetzt, das im Wesentlichen dieselbe Gestalt wie die Tragstruktur 2 mit einem im Wesentlichen gleichen Durchmesser aufweist. Dadurch wird zwischen dem Innenelement 22 und dem Ventilgehäuse 14 ein ebenfalls im Wesentlichen zylindrischer Hohlraum ausgebildet. Der Übergang vom Innenelement 22 zum Drallelement 1 ist sowohl auf der Innenseite als auch auf der äußeren Umfangsfläche stetig.

An seinem stromaufwärtsseitigen Endabschnitt ist das Innenelement 22 mit dem Vakuumanschluss 26 bündig verbunden. Der Vakuumanschluss 26 ist ein rohrförmiger Anschlussstutzen, der eine Vakuumleitung 28 mit dem Inneren des Innenelements 22 verbindet und durch die Wand der Flüssigkeitszuführeinrichtung 24 geführt ist. Über die Hohlräume im Inneren des Drallelements 1, des Innenelements 22 und des Vakuumanschlusses 26 ist der Innenraum des brautechnischen Behälters 18 unmittelbar mit der Vakuumleitung 28 verbunden. An die Flüssigkeitszufuhreinrichtung 24 ist eine Flüssigkeitsleitung 30 zur Herführung der auszudampfenden bzw. zu entgasenden Flüssigkeit angeschlossen.

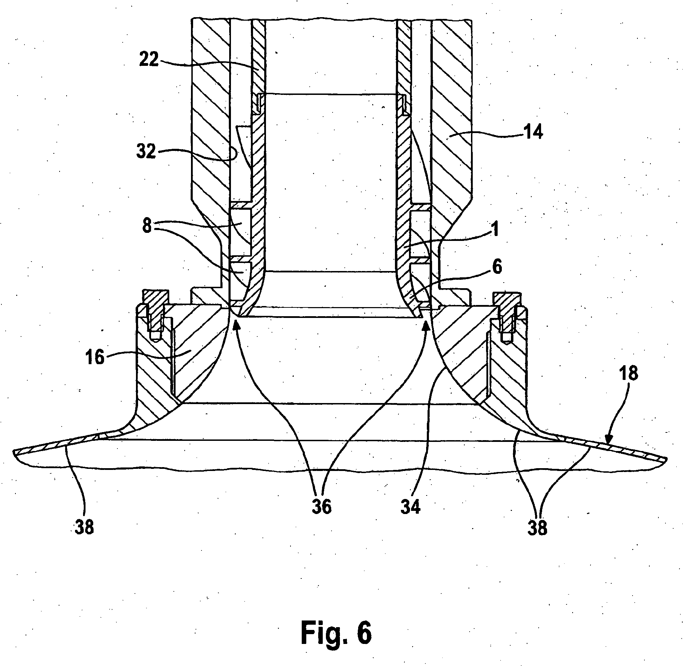

Wie insbesondere aus der detaillierten Darstellung der Fig. 6 ersichtlich, entspricht der Durchmesser des Drallelements 1 mit den auf seiner äußeren Umfangsfläche angeordneten Strömungsleitelementen 8 im Wesentlichen dem Innendurchmesser des Ventilgehäuses 14. Die Außenkanten der Strömungsleitelemente 8 liegen bündig an einer Innenfläche 32 des Ventilgehäuses 14 an. Zwischen dem stromabwärtsseitigen Endabschnitt 6 des Drallelements 1 und dem Übergang von der Innenfläche 32 des Ventilgehäuses 14 zu einer Innenfläche 34 des Flanschs 16 ist eine Öffnung 36 in Gestalt eines Ringspalts ausgebildet. Dabei geht die Innenfläche 32 des Ventilgehäuses 14 stetig auf die Innenfläche 34 des Flanschs 16 über. Die Innenfläche 34 des Flanschs 16 wiederum geht stetig auf eine sich bündig anschließende Innenfläche 38 des brautechnischen Behälters 18 über. Die Innenfläche 34 des Flanschs 16 weist im Wesentlichen die Gestalt eines Kegelstumpfes mit kurvenförmiger Flankengestalt auf. Insgesamt verändert sich die Ausrichtung einer Tangente an der Innenfläche 32 des Ventilgehäuses 14 über eine am Flansch 16 zu einer am brautechnischen Behälter 18 von einer im Wesentlichen vertikalen Ausrichtung zu einer im Wesentlichen horizontalen Ausrichtung mit einem durchgehend stetigen Übergang.

Die Ausdampfvorrichtung 20 weist ein Einlaufventil 12, wenigstens jedoch ein Drallelement 1 sowie einen brautechnischen Behälter 18 auf. Alle weiteren Aggregate, wie beispielweise Pumpen oder Steuereinrichtungen, sind die einer bekannten Ausdampfvorrichtung und werden daher nicht näher beschrieben.

Während des Ausdampfungs- bzw. Entgasungsvorgangs beträgt die Spaltbreite zwischen dem Drallelement 1 und dem Ventilgehäuses 14 zwischen 0 bis 40 mm. Besonders vorteilhaft ist eine Spaltbreite zwischen 10 bis 20 mm. Insbesondere ist eine Spaltbreiteneinstellung von etwa 15 mm zu bevorzugen.

Zur Ausdampfung von Stoffen aus einer Flüssigkeit in der Ausdampfvorrichtung 20 wird die Flüssigkeit über das Einlaufventil 12 in den brautechnischen Behälter 18 eingebracht. Dabei strömt die Flüssigkeit über die Flüssigkeitsleitung 30 in das Innere der Flüssigkeitszufuhreinrichtung 24 ein. Die Flüssigkeit strömt vertikal abwärts durch den Hohlraum, der zwischen dem Innenelement 22 und dem Ventilgehäuse 14 ausgebildet wird und weiter zum Hohlraum, der zwischen der Tragstruktur 2 und dem Ventilgehäuse 14 ausbildet ist und tritt in Kontakt mit der äußeren Umfangsfläche der Tragstruktur 2 und den Umfangsflächen der Strömungsleitelemente 8. Beim Durchströmen dieses Hohlraums wird die Flüssigkeit auf die vorstehend beschriebene Weise umgelenkt bzw. beschleunigt, wobei ihr auch ein Drehimpuls entsprechend der Führung der Strömungsleitelemente 8 aufgeprägt wird. Die tangential beschleunigte Flüssigkeit tritt durch die Öffnung 36 in Gestalt eines schirmartigen Flüssigkeitsfilms aus und legt sich an die Innenfläche 34 des Flanschs 16 an. Daran und an der sich anschließenden Innenfläche 38 des brautechnischen Behälters 18 fließt die Flüssigkeit als ein geschlossener Flüssigkeitsfilm ab. Der Flüssigkeitsfilm strömt von der Decke des brautechnischen Behälters 18 über die schräg oder im Wesentlichen senkrecht ausgerichteten seitlichen Innenwänden zu dessen Boden oder in eine Auffangrinne oder dergleichen, von wo die gesammelte, entgaste Flüssigkeit abgezogen wird. Somit ist während des Ausdampfungs- bzw. Entgasungsvorgangs praktisch die gesamte Innenfläche des brautechnischen Behälters 18 mit dem Film der auszudampfenden bzw. zu entgasenden Flüssigkeit belegt, der beim Abfließen durchgehend an der Wand anliegt.

Die Eigenschaften des vom Einlaufventil 12 ausgebildeten Flüssigkeitsfilms sind für die Qualität der Ausdampfung bzw. Entgasung von wesentlicher Bedeutung. So bestimmt insbesondere die Dicke des Flüssigkeitsfilms, ob alle Volumenelemente der Flüssigkeit den an der Oberfläche der Flüssigkeit herrschenden Ausdampfungs- bzw. Entgasungsbedingungen ausgesetzt werden oder nicht. Dies beeinflusst wiederum die Vollständigkeit der Ausdampfung und/oder Entgasung der Flüssigkeit. Vorteilhafterweise beträgt die Dicke des Flüssigkeitsfilms bis etwa 5 mm, vorzugsweise bis 3 mm, insbesondere bis 1,5 mm.

Typischerweise betragen die Volumenströme durch das Einlaufventil 5 bis 90 mVh, vorzugsweise 5 bis 60 m³/h und insbesondere 5 bis 45 m³/h. Der Vordruck der einströmenden Flüssigkeit ist in einem Bereich von 0 bis 3 bar, vorzugsweise 0,5 bis 2,5 bar, insbesondere etwa 1,5 bar. Der Absolutdruck im Innern des Entgasungsbehälters kann kleiner 800 mbar, vorzugsweise kleiner 200 mbar, insbesondere kleiner 100 mbar, betragen. Der Innendurchmesser des Ventilgehäuses 14 des Einlaufventils 12 beträgt bis zu 400 mm, vorzugsweise bis zu 250 mm, insbesondere bis zu 150 mm. Die Länge des Ventilgehäuses 14 beträgt zwischen dem ein- und zehnfachen seines Innendurchmessers, vorzugsweise das zwei- bis fünffache. Das Drallelement 1 weist einen Durchmesser auf, der zwischen dem 0,8-fachen bis 1,1 -fachen, insbesondere zwischen dem 0,9-fachen bis 1,0-fachen des Innendurchmessers des Ventilgehäuses 14 beträgt. Das Einlaufventil 12 kann zum Ausdampfen bzw. Entgasen von Flüssigkeiten, vorzugsweise von solchen mit einer wasserähnlichen Viskosität, verwendet werden.

Der stromaufwärtsseitige Endabschnitt 4 der Tragstruktur 2 kann an Stelle einer stufenförmige Verjüngung auch eine beliebige andere Gestalt aufweisen.

Der stromabwärtsseitige Endabschnitt 6 der Tragstruktur 2 kann zusätzlich eine Hinterschneidung zur Ausbildung einer Strömungsabrisskante aufweisen.

Die Strömungsleitelemente 8 des Drallelements 1 müssen nicht auf der äußeren Umfangsfläche der Tragstruktur 2 angeordnet sein. Denkbar ist auch, dass sie im Hohlraum der Tragstruktur 2, insbesondere auf einer Zylinderinnenfläche der Tragstruktur 2, angeordnet sind.

Die Anzahl der Strömungsleitelemente 8 ist nicht auf 6 beschränkt. Das Drallelement 1 kann wenigstens 1, vorzugsweise 2 bis 18, insbesondere 4 bis 8 Strömungsleitelemente 8 aufweisen.

Ferner können die Strömungsleitelemente 8 eine von der Streifenform abweichende Gestalt aufweisen. So können sie beispielweise als schmale Streifenabschnitte ausgebildet sein. Diese können auch versetzt zueinander angeordnet sein. Zudem müssen sie nicht über ihre gesamte Längsseite mit der Zylinderfläche der Tragstruktur 2 verbunden sein. Es ist auch eine abschnittsweise oder punktuelle Befestigung an der Tragstruktur 2 denkbar.

Darüber hinaus kann auch der Winkel zwischen den Strömungsleitelementen 8 und der äußeren Umfangsfläche der Tragstruktur 2 vom rechten Winkel beliebig abweichen.

Die Führung der Strömungsleitelemente 8 kann in Strömungsrichtung der Flüssigkeit gesehen auch gegen den Uhrzeigersinn ausgerichtet sein.

Die Strömungsleitelemente 8 müssen nicht vom stromaufwärtsseitigen Endabschnitt 4 der Tragstruktur 2 bis zu deren stromabwärtsseitigen Endabschnitt 6 reichen.

Es ist möglich, dass sich wenigstens ein Teil der Strömungsleitelemente 8 nur über einen Teil der Länge des Schafts 2 erstreckt.

Ferner können die Strömungsleitelemente 8 auch mehr oder weniger als einen Bereich von etwa des halben Umfangs der Tragstruktur 2 (ca. 180 °) umfassen. Alternativ kann dieser Bereich von etwa 15 ° bis zu mehreren Umdrehungen um den Schaft reichen.

Die Steigung wenigstens eines der Strömungsleitelemente 8 kann in der Nähe des stromaufwärtsseitigen Endabschnitts 4 auch kleiner als in der Nähe des stromabwärtsseitigen Endabschnitts 6 sein. Die Steigung kann aber auch über die gesamte Länge der Tragstruktur 2 konstant sein.

Sowohl die Tragstruktur 2 des Drallelements 1 als auch das Innenelement 22 müssen nicht notwendigerweise als Hohlzylinder ausgeführt sein. Wenigstens eines davon kann auch als Vollzylinder oder in einer ähnlichen Gestalt ausgeführt sein. Zudem kann wenigstens eines davon auch eine gitterförmige Gestalt und/oder Aussparungen aufweisen. Ferner kann die Tragstruktur 2 und/oder das Innenelement 22 auch einen Querschnitt aufweisen, der eine mehreckige oder im Wesentlichen elliptische Gestalt aufweist.

Das Drallelement 1 kann mit dem Innenelement 22 auch einstückig verbunden sein. Alternativ können beide als ein einziges Bauteil ausgebildet sein. Ferner ist auch denkbar, dass das Einlaufventil kein Innenelement 22 aufweist.

Der Anschluss des brautechnischen Behälters 18 an das Vakuum muss nicht notwendigerweise über das Einlaufventil 12 erfolgen. Er kann auch auf eine beliebige andere Weise außerhalb des Einlaufventils 12 erfolgen. In diesem Fall kann der Vakuumanschluss 26 im Einlaufventil 12 entfallen.

Das Einlaufventil 12 muss nicht mittels des Flanschs 16 am brautechnischen Behälter 18 befestigt sein. Denkbar ist auch, das Einlaufventil 12 ohne den Flansch 16 unmittelbar am brautechnischen Behälter 18 zu befestigen.

Die Außenkanten der Strömungsleitelemente 8 müssen nicht bündig an der Innenfläche 32 des Ventilgehäuses 14 anliegen, sondern können auch beabstandet davon sein, so dass zwischen den Strömungsleitelementen 8 und der Innenfläche 32 des Ventilgehäuses 14 wenigstens ein Spalt ausgebildet wird.

Die Öffnung 36 muss nicht zwangsläufig die Gestalt eines Kreisringsegments aufweisen. Sie kann auch eine beliebige andere geeignete Gestalt aufweisen.

Die Gestalt der Innenfläche 34 des Flanschs 16 kann alternativ auch eine andere als die Gestalt eines Kegelstumpfes mit kurvenförmiger Flankengestalt aufweisen. Möglich ist beispielsweise die Gestalt eines Kegelstumpfes mit linearer Flankengestalt.

Die Flüssigkeitszuführung über die Flüssigkeitszuführeinrichtung 24 ist nicht auf eine vertikale Zuführrichtung beschränkt. Sie kann auch eine beliebige andere Richtung aufweisen.

Nach dem Austritt der Flüssigkeit aus der Öffnung 36 kann der ausgebildete Flüssigkeitsschirm auch auf einen vorbestimmten Bereich der Innenfläche 38 des brautechnischen Behälters 18 auftreffen.

Das vorstehend beschriebene Drallelement, bzw. das damit ausgestattete Einlaufventil ist im Zusammenspiel mit einem brautechnischen Behälter auch als Gefäß für eine wesentlich verbesserte Expansionsverdampfung/-kühlung in einem brautechnischen Prozeß verwendbar. Durch das mit dem Drallelement ausgestattete Einlaufventil kann eine Expansionsverdampfung beim Einlaufen der Flüssigkeit verbessert werden. Dabei können die vorstehend im Zusammenhang mit der Ausdampfung bzw. Entgasung als vorteilhaft diskutierten Effekte in ähnlich vorteilhafter Weise für eine Expansions kühlung einer heißen Flüssigkeit beim Einlaufen in den Behälter für eine verbesserte Kühlung ausgenutzt werden.

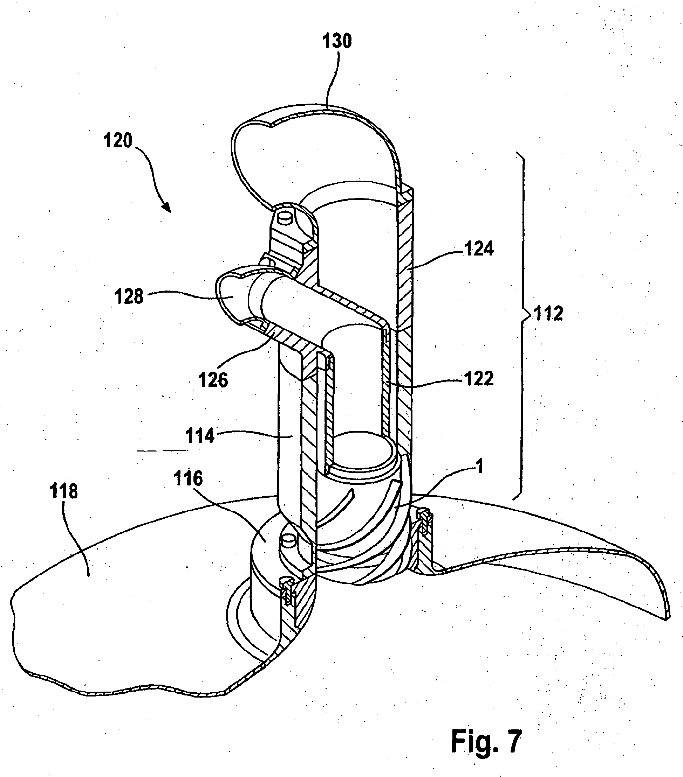

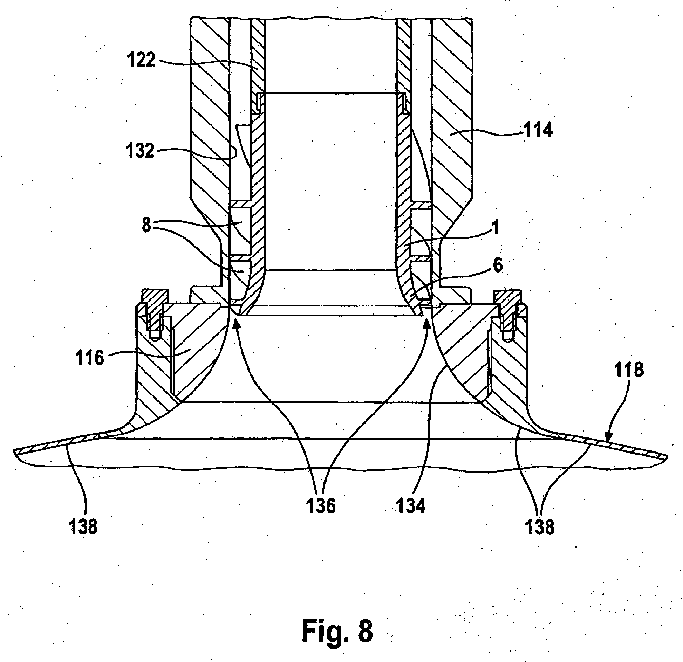

Gemäß der Darstellung in den Fig. 7 und 8 weist ein Einlaufventil 112 das Drallelement 1, ein Ventilgehäuse 114, einen Flansch 116 zum Anschließen an den brautechnischen Behälter 118 einer Ausdampfvorrichtung 120, ein Innenelement 122, eine Flüssigkeitszuführeinrichtung 124 und einen Vakuumanschluss 126 auf. Hinsichtlich des Drallelements 1 wird beispielhaft auf die Beschreibung der Fig. 2 verwiesen.

Das Ventilgehäuse 114 weist im Wesentlichen die Gestalt eines zylindrischen Hohlkörpers auf. In seinem stromaufwärtsseitigen Endabschnitt weist es die Flüssigkeitszuführeinrichtung 124 und den Vakuumanschluss 126 auf. An seinem strömungsabwärtsseitigen Endabschnitt ist das Ventilgehäuse 114 mit dem Flansch 116 verbunden. Der Flansch 116 ist in den brautechnischen Behälter 118 der Ausdampfvorrichtung 120 eingebaut. Von der Ausdampfvorrichtung 120 ist in Fig. 7 das Einlaufventil 112 und der brautechnische Behälter 118 dargestellt. Als weitere Komponenten der Ausdampfvorrichtung 120, wie beispielsweise Pumpen oder Steuereinrichtungen, können handelsübliche, aus dem Stand der Technik bekannte Komponenten eingesetzt werden.

Das Drallelement 1 ist im Innern des Ventilgehäuses 14 angeordnet. Genauer ist das Drallelement 1 am stromabwärtsseitigen Endabschnitt des Ventilgehäuses 14 coaxial zu dessen Zentralachse angeordnet. Der Durchmesser der Tragstruktur 2 ist kleiner als der Innendurchmesser des Ventilgehäuses 114, wodurch sich ein im Wesentlichen zylindrischer Hohlraum zwischen der Tragstruktur 2 und dem Ventilgehäuse 114 ausbildet, der die Strömungsleitelemente 8 aufnimmt. Auf den stromaufwärtsseitigen Endabschnitt 4 des Drallelements 1 ist das Innenelement 122 aufgesetzt, das im Wesentlichen dieselbe Gestalt wie die Tragstruktur 2 mit einem im Wesentlichen gleichen Durchmesser aufweist. Dadurch wird zwischen dem Innenelement 122 und dem Ventilgehäuse 114 ein ebenfalls im Wesentlichen zylindrischer Hohlraum ausgebildet. Der Übergang vom Innenelement 122 zum Drallelement 1 ist sowohl auf der Innenseite als auch auf der äußeren Umfangsfläche stetig.

An seinem stromaufwärtsseitigen Endabschnitt ist das Innenelement 122 mit dem Vakuumanschluss 126 bündig verbunden. Der Vakuumanschluss 126 ist ein rohrförmiger Anschlussstutzen, der eine Vakuumleitung 128 mit dem Inneren des Innenelements 122 verbindet und durch die Wand der Flüssigkeitszuführeinrichtung 124 geführt ist. Über die Hohlräume im Inneren des Drallelements 1, des Innenelements 122 und des Vakuumanschlusses 126 ist der Innenraum des brautechnischen Behälters 118 unmittelbar mit der Vakuumleitung 128 verbunden. An die Flüssigkeitszuführeinrichtung 124 ist eine Flüssigkeitsleitung 130 zur Herführung der auszudampfenden Flüssigkeit angeschlossen.

Wie insbesondere aus der detaillierten Darstellung der Fig. 8 ersichtlich, entspricht der Durchmesser des Drallelements 1 mit den auf seiner äußeren Umfangsfläche angeordneten Strömungsleitelementen 8 im Wesentlichen dem Innendurchmesser des Ventilgehäuses 114. Die Außenkanten der Strömungsleitelemente 8 liegen bündig an einer Innenfläche 132 des Ventilgehäuses 114 an. Zwischen dem stromabwärtsseitigen Endabschnitt 6 des Drallelements 1 und dem Übergang von der Innenfläche 132 des Ventilgehäuses 114 zu einer Innenfläche 134 des Flanschs 116 ist eine Öffnung 136 in Gestalt eines Ringspalts ausgebildet. Dabei geht die Innenfläche 132 des Ventilgehäuses 114 stetig auf die Innenfläche 134 des Flanschs 116 über. Die Innenfläche 134 des Flanschs 116 wiederum geht stetig auf eine sich bündig anschließende Innenfläche 138 des brautechnischen Behälters 118 über. Die Innenfläche 134 des Flanschs 116 weist im Wesentlichen die Gestalt eines Kegelstumpfes mit kurvenförmiger Flankengestalt auf. Insgesamt verändert sich die Ausrichtung einer Tangente an der Innenfläche 132 des Ventilgehäuses 114 über eine am Flansch 116 zu einer am brautechnischen Behälter 118 von einer im Wesentlichen vertikalen Ausrichtung zu einer im Wesentlichen horizontalen Ausrichtung mit einem durchgehend stetigen Übergang.

Die tangential beschleunigte Flüssigkeit tritt durch die Öffnung 136 in Gestalt eines schirmartigen Flüssigkeitsfilms aus und legt sich an die Innenfläche 134 des Flanschs 116 an. Daran und an der sich anschließenden Innenfläche 138 des brautechnischen Behälters 118 fließt die Flüssigkeit als ein geschlossener Flüssigkeitsfilm ab.

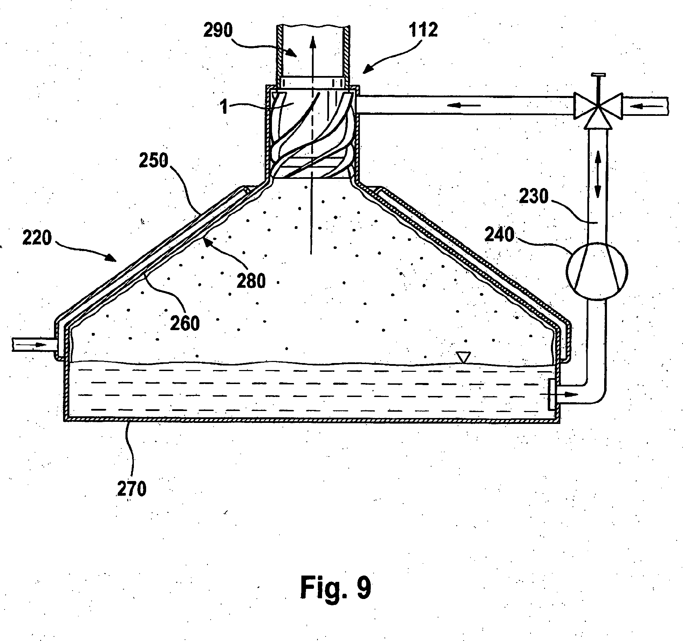

In Fig. 9 ist eine Würzepfanne 220 dargestellt, welche das Einlaufventil 112 aufweist. Dabei wird die Würze über eine Umlaufleitung 230 mittels einer Pumpe 240 dem Einlaufventil 112 zugeführt. Das Einlaufventil 112 ist im oberen Teil des konisch zulaufenden Pfannenmantels 250 angeordnet. Der Pfannenmantel 250 kann als mit Dampf beheizbarer Doppelmantel ausgeführt sein.

Nach Ausbildung des Flüssigkeitsfilms mittels des Drallelements 1 im Einlaufventil 112 fließt dieser entlang der Innenoberfläche 260 der Pfanne 220 zu deren Boden 270 hin ab. Aus dem ablaufenden Flüssigkeitsfilm 280 dampfen leichtflüchtige Stoffe aus. Die ausgedampften Stoffe werden durch den inneren Hohlraum 290 des Einlaufventils 1 nach außen geführt.

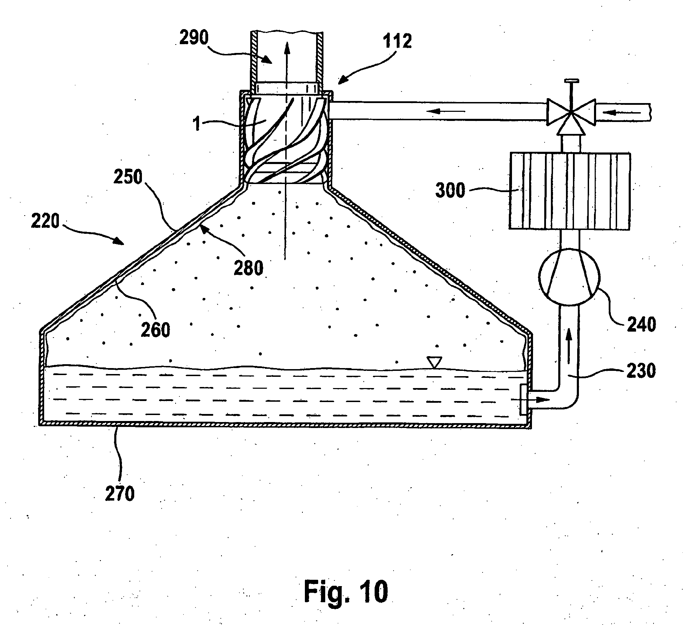

Die in Fig. 10 dargestellte Würzepfanne 220 weist als weitere Komponente einen in die Umlaufleitung eingebauten Außenkocher 300 auf. Der Aufbau ist im Übrigen analog der Beschreibung zu Fig. 9.

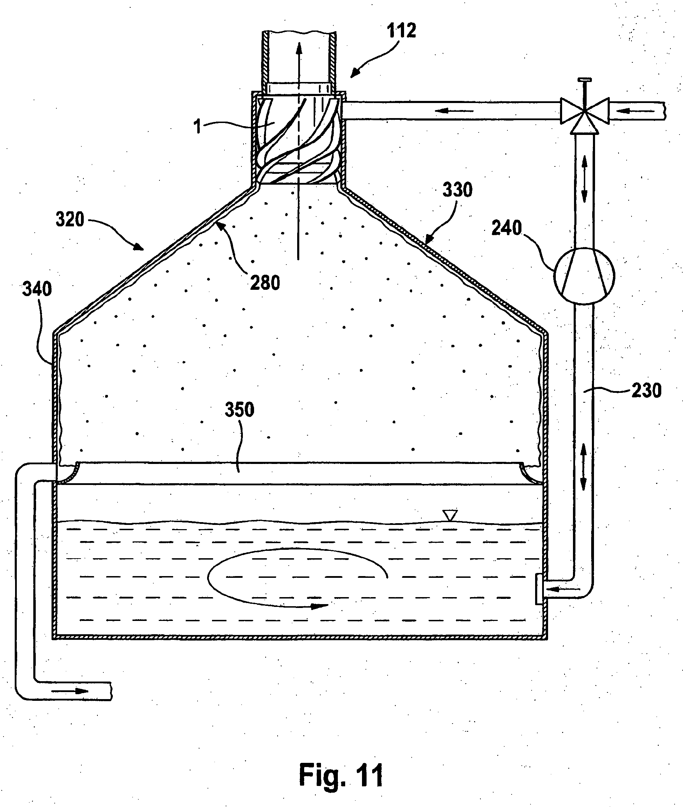

Fig. 11 stellt einen Whirlpool 320 dar, welcher das Einlaufventil 1 aufweist. Dabei wird die Würze über eine Umlaufleitung 230 mittels einer Pumpe 240 dem Einlaufventil 1 zugeführt. Das Einlaufventil 1 ist im oberen Teil der konisch zulaufenden Whirlpoolzarge 330 angeordnet. Ferner weist der Whirlpoolinnenraum im Bereich seiner senkrechten Zarge 340 eine umlaufende Rinne 350 zum Auffangen der ausgedampften, DMS-armen Würze auf.

Hinsichtlich des Ausdampfungsvorgangs wird insbesondere auf die Beschreibung der Fig. 1 und 6 verwiesen. So kann die Würze nach dem Abziehen aus der Rinne 350 je nach gewünschtem Ausdampfüngsgrad beliebig oft dem Einlaufventil 1 erneut zugeführt werden. Hierzu kann beispielsweise die Umlaufleitung 230 verwendet werden. Nach Erreichen des gewünschten Ausdampfungsgrades wird die Würze schließlich aus der Auffangrinne 350 abgezogen und der Würzekühlung zugeführt.

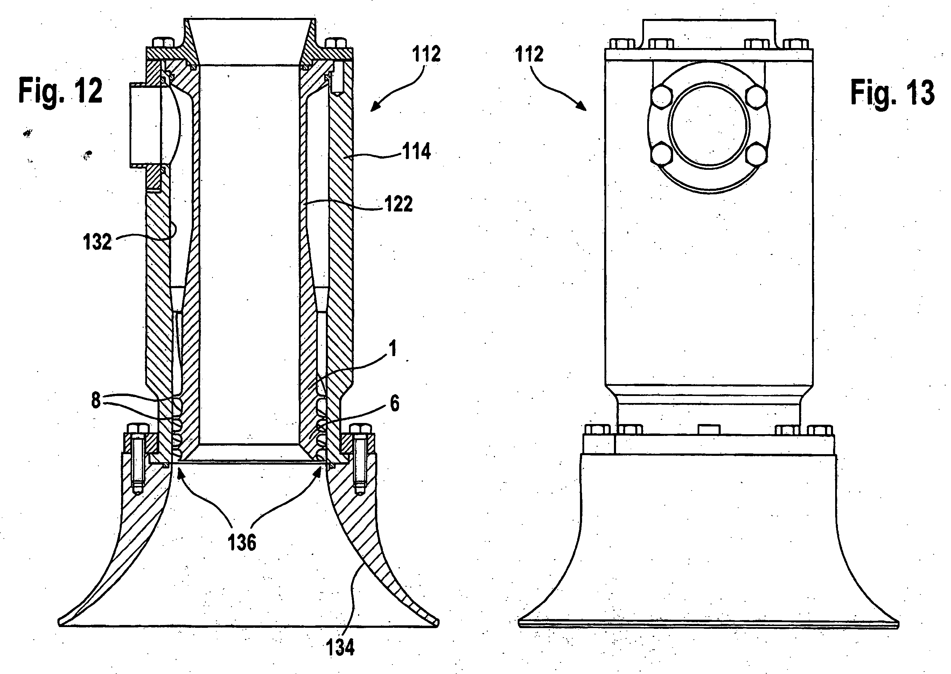

Die Figuren 12 und 13 stellen ein weiteres Einlaufventil 112 dar. Das Drallelement 1 ist hierbei in einer weiter optimierten Form, insbesondere zur Verbesserung der Ausdampfeffizienz, dargestellt. Hinsichtlich der Detaildarstellung wird auf die Beschreibung der Figuren 7 und 8 verwiesen.

## Patentansprüche

1. Verwendung eines Drallelements (1) in einem brautechnischen Prozeß zum Ausdampfen und/oder zum Entgasen von leichtflüchtigen Stoffen oder Gasen, insbesondere von leichtflüchtigen Aromastoffen, DMS, Kohlenstoffdioxid, Sauerstoff oder dergleichen, aus Flüssigkeiten, insbesondere aus einer Maische, einer Würze, einer Hefesuspension, einem Anschwänzwasser oder dergleichen, beim Einbringen derselben in einen brautechnischen Behälter (18; 118),
wobei das Drallelement (1) ein Drallelement (1) für ein Einlaufventil (12; 112) eines brautechnischen Behälters (18; 118) zum Einbringen einer Flüssigkeit, insbesondere einer Maische, einer Würze, einer Hefesuspension, einem Anschwänzwasser oder dergleichen, in den brautechnischen Behälter (18; 118), insbesondere in eine Maischepfanne, einen Maischebottich, eine kombinierte Maisch-/Würzepfanne, eine kombinierte Maisch-/Würze-/Strippingpfanne, eine Würzepfanne (220), eine kombinierte Whirlpoolpfanne, einen Whirlpool (320), eine Läutervorrichtung, einen Ausdampfbehälter oder dergleichen, mit wenigstens einem Strömungsleitelement (8), mittels dessen der durch das Einlaufventil (12; 112) strömenden Flüssigkeit ein Drehimpuls aufprägbar ist, ist.

2. Verwendung nach Anspruch 1, **dadurch gekennzeichnet, dass** das Drallelement (1) zum Ausdampfen von leichtflüchtigen Aromastoffen, insbesondere von DMS, aus einer Maische beim Einbringen derselben in die Maischepfanne, in den Maischebottich, in eine Läutervorrichtung, in die kombinierte Maisch/Würzepfanne, eine kombinierte Maisch-/Würze-/Strippingpfanne, oder in einen Ausdampfbehälter verwendet wird.

3. Verwendung nach Anspruch 1, **dadurch gekennzeichnet, dass** das Drallelement (1) zum Ausdampfen von leichtflüchtigen Aromastoffen, insbesondere von DMS, aus einer Würze beim Einbringen derselben in die kombinierte Maisch/Würzepfanne, in die kombinierte MaischWürze-/Strippingpfanne, in die Würzepfanne (220), in die kombinierte Whirlpoolpfanne, in den Whirlpool (320) oder in einen Ausdampfbehälter verwendet wird.

4. Verwendung nach Anspruch 1, **dadurch gekennzeichnet, dass** das Drallelement (1) zum Ausdampfen von leichtflüchtigen Aromastoffen, insbesondere von DMS, aus einer Würze vor Abkühlen der Würze, insbesondere in einem Würzekühler, verwendet wird.

5. Verwendung nach Anspruch 1, **dadurch gekennzeichnet, dass** das Drallelement (1) zum Entgasen von gasförmigen Stoffen, insbesondere von Kohlenstoffdioxid, aus einer Hefesuspension, insbesondere von Erntehefe und Gelägerhefe, verwendet wird.

6. Verwendung nach Anspruch 1, **dadurch gekennzeichnet, dass** das Drallelement (1) zum Entgasen von gasförmigen Stoffen, insbesondere von Sauerstoff, aus einem Anschwänzwasser beim Einbringen desselben in eine Läutervorrichtung verwendet wird.

## Claims

1. Use of a swirl element (1) in a brewing process for evaporating and/or for expulsing highly volatile substances or gases, in particular highly volatile flavor substances, DMS, carbon dioxide, oxygen or the like from liquids, in particular from a mash, a wort, a yeast suspension, a sparge water or the like, during its introduction into a brewing vessel (18; 118),
wherein the swirl element (1) is a swirl element (1) for an inlet valve (12; 112) of a brewing vessel (18; 118) for introducing a liquid, in particular a mash, a wort, a yeast suspension, a sparge water or the like, into the brewing vessel (18; 118), in particular into a mash tun, a mash vat, a combined mash/wort tun, a combined mash/wort/stripping tun, a wort tun (220), a combined whirlpool tun, a whirlpool (320), a clarifying device, an evaporating vessel or the like, comprising at least one flow-directing element (8) whereby an angular momentum may be imparted to the liquid flowing through the inlet valve (12; 112).

2. Use according to claim 1, **characterized in that** the swirl element (1) is used for evaporating highly volatile flavor substances, in particular DMS, from a mash during the introduction of the latter into the mash tun, into the mash vat, into a clarifying device, into the combined mash/wort tun, a combined mash/wort/stripping tun, or into an evaporating vessel.

3. Use according to claim 1, **characterized in that** the swirl element (1) is used for evaporating highly volatile flavor substances, in particular DMS, from a mash during the introduction of the latter into the combined mash/wort tun, into the combined mash/wort/stripping tun, into the wort tun (220), into the combined whirlpool tun, into the whirlpool (320), or into an evaporating vessel.

4. Use according to claim 1, **characterized in that** the swirl element (1) is used for evaporating highly volatile flavor substances, in particular DMS, from a wort prior to cooling of the wort, in particular in a wort cooler.

5. Use according to claim 1, **characterized in that** the swirl element (1) is used for expulsing gaseous substances, in particular carbon dioxide, from a yeast suspension, in particular of harvested yeast and processing yeast.

6. Use according to claim 1, **characterized in that** the swirl element (1) is used for expulsing gaseous substances, in particular oxygen, from a sparge water during the introduction thereof into a clarifying device.

## Revendications

1. Utilisation d'un élément torsadé créateur de tourbillons (1) dans un processus de brasserie pour assurer l'évaporation et/ou l'élimination par dégazage de substances très volatiles ou de gaz, notamment des substances aromatiques très volatiles, le DMS (sulfure de diméthyle ou diméthyle-sulfure), le dioxyde de carbone, de l'oxygène ou analogue, contenus dans des liquides, notamment dans une maische, un moût, une suspension de levure, une eau de lavage des drêches ou analogue, lors de l'introduction de ceux-ci dans un réservoir de brasserie (18; 118),
l'élément torsadé créateur de tourbillons (1) étant un élément torsadé créateur de tourbillons (1) destiné à une vanne d'écoulement d'entrée (12; 112) d'un réservoir de brasserie (18; 118) pour l'introduction d'un liquide, notamment une maische, un moût, une suspension de levure, une eau de lavage des drêches ou analogue, dans le réservoir de brasserie (18; 118), notamment dans une cuve à maische, un bac à maische, une cuve combinée de maische/moût, une cuve combinée de stripping de maische/moût, une cuve de cuisson du moût (220), une cuve combinée de centrifugation, une centrifugeuse (320), un dispositif de filtration ou de clarification, un réservoir d'évaporation ou analogue, l'élément torsadé créateur de tourbillons comportant au moins un élément de guidage d'écoulement (8) au moyen duquel on confère au liquide s'écoulant à travers la vanne d'écoulement d'entrée (12; 112), une impulsion de rotation.

2. Utilisation selon la revendication 1, **caractérisée en ce que** l'élément torsadé créateur de tourbillons (1) est utilisé pour assurer l'évaporation de substances aromatiques très volatiles, notamment du DMS (sulfure de diméthyle ou diméthyle-sulfure), contenues dans une maische lors de l'introduction de celle-ci dans la cuve à maische, dans le bac à maische, dans un dispositif de filtration ou de clarification, dans la cuve combinée de maische/moût, une cuve combinée de stripping de maische/moût, ou dans un réservoir d'évaporation.

3. Utilisation selon la revendication 1, **caractérisée en ce que** l'élément torsadé créateur de tourbillons (1) est utilisé pour assurer l'évaporation de substances aromatiques très volatiles, notamment du DMS (sulfure de diméthyle ou diméthyle-sulfure), contenues dans un moût lors de l'introduction de celui-ci dans la cuve combinée de maische/moût, dans la cuve combinée de stripping de maische/moût, dans la cuve de cuisson du moût (220), dans la cuve combinée de centrifugation, dans la centrifugeuse (320),ou dans un réservoir d'évaporation.

4. Utilisation selon la revendication 1, **caractérisée en ce que** l'élément torsadé créateur de tourbillons (1) est utilisé pour assurer l'évaporation de substances aromatiques très volatiles, notamment du DMS (sulfure de diméthyle ou diméthyle-sulfure), contenues dans un moût, avant le refroidissement du moût, notamment dans un refroidisseur de moût.

5. Utilisation selon la revendication 1, **caractérisée en ce que** l'élément torsadé créateur de tourbillons (1) est utilisé pour assurer l'élimination par dégazage de substances gazeuses, notamment de dioxyde de carbone, contenues dans une suspension de levure, notamment de la levure de récolte ou de récupération et de la levure de lie.

6. Utilisation selon la revendication 1, **caractérisée en ce que** l'élément torsadé créateur de tourbillons (1) est utilisé pour assurer l'élimination par dégazage de substances gazeuses, notamment d'oxygène, contenues dans une eau de lavage des drêches lors de l'introduction de celle-ci dans un dispositif de filtration ou de clarification.
